# EUROPÄISCHE PATENTANMELDUNG

(11) **EP 2 011 769 A1**
(43) Veröffentlichungstag der Anmeldung: **07.01.2009**
(21) Anmeldenummer: 07111923.4
(22) Anmeldetag: 06.07.2007
(51) Int. Cl.: C03B 19/10, C03C 12/00

(54) **Gesintertes, hochreines Siliciumdioxid enthaltendes Granulat**

(71) Anmelder: Evonik Degussa GmbH, 45128 Essen (DE)
(72) Erfinder: Oswald, Monika, 63454 Hanau (DE); Schulze-Isfort, Christian, 63694 Limeshain (DE); Schumacher, Kai, 65719 Hofheim (DE); Hofmann, Ralph, 74722 Buchen (DE); Kissner, Corinna, 63450 Hanau (DE)

(57) **Zusammenfassung**

Verfahren zur Herstellung eines gesinterten Siliciumdioxid enthaltenden Granulates mit einer BET-Oberfläche von weniger als 1 m²/g und einem Anteil an Verunreinigungen von weniger als 50 ppm, bei dem man ein Gemisch, welches Siliciumdioxidpulver und eine Metallverbindung enthält, in einer Atmosphäre mit einer relativen Luftfeuchte von 10 bis 100%, bei Temperaturen von 0 bis 50°C intensiv mittels eines Dispergieraggregates vermengt, die krümelige Masse in Stücke zerteilt, nachfolgend trocknet, reinigt und sintert. Die Feuchte des Siliciumdioxidpulvers und/oder die Luftfeuchte reicht wenigstens aus, um die Metallverbindung vollständig zu hydrolysieren.

## Beschreibung

Die Erfindung betrifft ein Verfahren zur Herstellung eines gesinterten, hochreinen, Siliciumdioxid enthaltenden Granulates und das Granulat selbst.

Es sind zahlreiche Methoden zur Herstellung von Siliciumdioxidgranulaten ausgehend von amorphem Siliciumdioxid bekannt. Geeignete Ausgangsmaterialien können durch Sol-Gel-Verfahren hergestelltes Siliciumdioxid, Fällungskieselsäure oder ein pyrogen hergestelltes Siliciumdioxid sein. Die Herstellung umfasst gewöhnlich eine Agglomeration des Siliciumdioxides. Dies kann mittels Nassgranulierung erfolgen. Bei der Nassgranulierung wird aus einer kolloidalen Siliciumdioxid-Dispersion durch ständiges Mischen oder Rühren ein Sol und daraus unter allmählichem Entzug der Feuchte ein Gel erzeugt, welches nachfolgend gesintert werden kann. Die Herstellung mittels Nassgranulierung ist aufwändig, insbesondere wenn hohe Ansprüche an eine niedrige Verunreinigung des Granulates gestellt werden.

Es ist weiterhin möglich, gesintertes Siliciumdioxid durch Kompaktierung von Siliciumdioxid zu erhalten. Die Kompaktierung, ohne Bindemittel, von pyrogen hergestelltem Siliciumdioxid ist schwierig, weil pyrogen hergestelltes Siliciumdioxid sehr trocken ist, und keine Kapillarkräfte die Partikelbindung herbeiführen können. Pyrogen hergestellte Siliciumdioxide zeichnen sich durch eine extreme Feinteiligkeit, ein niedriges Schüttgewicht, hohe spezifische Oberfläche, sehr hohe Reinheit, weitestgehend sphärische Primärpartikelform und das Fehlen von Poren aus. Das pyrogen hergestellte Siliciumdioxid weist häufig eine hohe Oberflächenladung, die die Agglomeration elektrostatisch erschwert, auf.

Die Kompaktierung von pyrogen hergestelltem Siliciumdioxid stellt daher bislang keinen brauchbaren Weg zur Herstellung von qualitativ hochwertigen Sinterprodukten dar.

Die Verwendung von pyrogen hergestelltem Siliciumdioxid wird beispielsweise in DE-A-10050343 offenbart. Dort wird durch Sprühtrocknung von AEROSIL^{®} 380, Fa. Degussa ein hochreines Siliciumdioxidgranulat hergestellt. Dieses Granulat kann mittels bekannter Verfahren, wie Sieben, Luftsichtung bzw. Luftklassierung, klassiert werden. In DE-A-10050343 wird allerdings weiter ausgeführt, dass der Klassierungsschritt dazu führt, dass insbesondere metallische Verunreinigungen in das Siliciumdioxid eingebracht werden können, die oft nur aufwändig, beispielsweise durch starke Säuren, und oft nicht ausreichend entfernt werden können.

In US4042361 wird ein Verfahren zur Herstellung von Kieselglas offenbart, bei dem pyrogen hergestelltes Siliciumdioxid eingesetzt wird. Dieses wird in Wasser unter Bildung einer gießbaren Dispersion einarbeitet, nachfolgend das Wasser thermisch entfernt, den stückigen Rückstand bei 1150 bis 1500°C calciniert und anschließend in 1 -100 µm - große Granulate vermahlen und verglast. Die Reinheit des so hergestellten Kieselglases ist für heutige Anwendungen nicht ausreichend. Das Herstellverfahren ist aufwändig und teuer.

Auch in WO91/13040 wird ein Verfahren offenbart, bei dem pyrogen hergestelltes Siliciumdioxid zur Herstellung von Kieselglas eingesetzt wird. Das Verfahren umfasst das Bereitstellen einer wässrigen Dispersion von pyrogenem Siliciumdioxid mit einem Feststoffgehalt von etwa 5 bis etwa 55 Gew.-%; das Überführen der wässrigen Dispersion in poröse Teilchen, indem man die wässrige Lösung in einem Ofen bei einer Temperatur zwischen etwa 100 bis etwa 200°C trocknet und das getrocknete poröse Teilchen zerkleinert; und nachfolgendes Sintern der porösen Teilchen in einer Atmosphäre mit einem Wasser-Partialdruck im Bereich von 0,2 bis 0,8 Atmosphären bei Temperaturen unterhalb etwa 1200 °C. Es werden hochreine Kieselglasgranulate mit einem Durchmesser von etwa 3 bis 1000 µm erhalten.

EP-A-1717202 offenbart ein Verfahren zur Herstellung zur Kieselglasgranulat durch Sintern eines pyrogen hergestellten Siliciumdioxides, welches nach einem bestimmten Verfahren auf Stampfdichten von 150 bis 800 g/l kompaktiert wurde. Bei diesem Verfahren, in DE-A-19601415 offenbart, handelt es sich um eine Sprühtrocknung von in Wasser dispergiertem Siliciumdioxid und nachfolgender Temperung bei 150 bis 1100°C. Da so erhaltene Granulat kann gesintert werden, liefert jedoch keine völlig blasenfreien Kieselglasgranulate.

EP-A-1258456 offenbart ein Verfahren zur Herstellung eines monolithischen Glasformkörpers, bei dem man ein Siliciumalkoxid hydrolysiert und nachfolgend unter Bildung eines Sols ein pyrogen hergestelltes Siliciumdioxidpulver hinzugibt, das Sol nachfolgend in ein Gel überführt, das Gel trocknet und nachfolgend sintert.

EP-A-1283195 offenbart ebenfalls Sol-Gel-Verfahren bei denen Siliciumalkoxide und pyrogen hergestelltes Siliciumdioxidpulver eingesetzt werden.

Prinzipiell folgen die im Stand der Technik bekannten Verfahren alle dem Schema, dass zunächst ein Siliciumalkoxid hydrolysiert wird, ein Siliciumdioxidpulver unter Bildung eines Soles entsteht, welches in ein Gel überführt wird, das Gel anschließend getrocknet und nachfolgend gesintert. Der Prozess umfasst etliche Stufen, ist langwierig und empfindlich gegen Prozessschwankungen.

Aufgabe der vorliegenden Erfindung war es ein Verfahren zur Herstellung eines Kieselglasgranulates bereitzustellen, welches gegenüber dem Stand der Technik einfach und kostengünstig durchzuführen ist, und sich zu einem blasenfreien Kieselglasgranulat sintern läßt.

Gegenstand der Erfindung ist Verfahren zur Herstellung eines gesinterten Siliciumdioxid enthaltenden Granulates mit einer BET-Oberfläche von weniger als 1 m²/g und einem Anteil an Verunreinigungen von weniger als 50 ppm, dadurch gekennzeichnet, dass man ein Gemisch, welches
- Siliciumdioxidpulver und eine Metallverbindung enthält,
- in einer Atmosphäre mit einer relativen Luftfeuchte von 10 bis 100%, vorzugsweise 40 bis 80%,
- bei Temperaturen von 0 bis 50°C intensiv mittels eines Dispergieraggregates vermengt, die krümelige Masse in Stücke zerteilt, nachfolgend trocknet, reinigt und sintert, wobei
- das Siliciumdioxidpulver
   - aus Partikeln besteht, die auf ihrer Oberfläche an Siliciumatome gebundene Hydroxylgruppen, SiOH, tragen,
   - eine Feuchte von 0,1 bis 10 Gew.%, bezogen auf das Siliciumdioxidpulver, aufweist und
   - mit einem Anteil, bezogen auf die Summe von Pulver und Metallverbindung, von 40 bis 95 mol%, vorliegt
- die Metallverbindung,
   - unter den Reaktionsbedingungen flüssig ist und
   - bei Kontakt mit Wasser zu dem entsprechenden Metalloxid und einer flüchtigen Verbindung reagiert, und
- die Feuchte des Siliciumdioxidpulvers und/oder die Luftfeuchte wenigstens ausreicht um die Metallverbindung vollständig zu hydrolysieren,
- das Trocknen bei Temperaturen von 20°C bis 150°C und einem Druck von 1000 bis 10 mbar über einen Zeitraum von 1 Stunde bis 5 Tage erfolgt,
- die Reinigung bei 400°C bis 1100°C in einer Atmosphäre, die eine oder mehrere reaktive Verbindungen enthält, durchführt und
- anschließend sintert.

Die krümelige Masse kann vorteilhafterweise in Stücke mit einer maximalen Ausdehnung in einer Richtung von ca. 0,2 cm bis 2 cm zerteilt werden.

Das in dem erfindungsgemäßen Verfahren eingesetzte Siliciumdioxidpulver besteht ferner aus Partikeln, die an ihrer Oberfläche an Siliciumatome gebundene Hydroxylgruppen tragen. Vorzugsweise kann die Silanolgruppenkonzentration 0,2 mmol/g bis 1,2 mmol/g betragen.

Weiterhin zeichnet sich das erfindungsgemäße Verfahren dadurch aus, dass das Siliciumdioxidpulver eine Feuchte von 0,1 bis 10 Gew.-% aufweist. Die Feuchte resultiert aus der Wasseraufnahme aus der Luft und ist reversibel. Bevorzugt kann das Siliciumdioxidpulver eine Feuchte von 0,5 bis 5 und besonders bevorzugt 1 bis 2,5 Gew.-% aufweisen.

Das erfindungsgemäße Verfahren erlaubt es weiterhin dotierte Siliciumdioxidpulver einzusetzen. Dabei wird die Dotierkomponente vorzugsweise ausgewählt aus der Gruppe bestehend aus Oxiden von Ag, Al, B, Ce, Cs, Er, Ga, Ge, Li, K, Na, P, Pb, Ti, Ta, Tl und/oder Zr. Besonders bevorzugt können Al, B, Ti und Zr sein. Der Anteil der Dotierkomponente kann bevorzugt 1 ppm bis 20 Gew.-% und besonders bevorzugt 0,1 bis 10 Gew.-% betragen. In der Regel werden Siliciumdioxidpulver eingesetzt, die ein oder zwei Dotierkomponenten aufweisen.

Weiterhin können auch Silicium-Metall-Mischoxidpulver eingesetzt werden. Im Sinne der Erfindung soll das Silicium-Metall-Mischoxidpulver so definiert sein, dass die Metalloxidkomponente zu mehr als 20 Gew.-% vorliegt. Besonders bevorzugt können dies Silicium-Aluminium-Mischoxidpulver mit einem Anteil an Aluminiumoxid von 50 bis 80 Gew.-% sein.

Insbesondere kann bei dem erfindungsgemäßen Verfahren ein pyrogen hergestelltes Siliciumdioxidpulver eingesetzt werden. Unter "pyrogen hergestellt" ist zu verstehen, dass das Siliciumdioxidpulver durch Flammenhydrolyse oder Flammenoxidation erhalten wird. Dabei wird eine dampfförmige Siliciumverbindung, beispielsweise Siliciumtetrachlorid in einer Wasserstoff-/Sauerstoffflamme umgesetzt. Pyrogene Siliciumdioxide können je nach den Reaktionsbedingungen weitestgehend in Form aggregierter Primärpartikel bis weitestgehend nicht aggregiert vorliegen. Pyrogene Silicumdioxide sind weitestgehend frei von Poren. Das pyrogene Siliciumdioxidpulver kann auch in dotierter Form vorliegen. Die BET-Oberfläche des pyrogenen Siliciumdioxidpulvers kann bevorzugt 10 bis 400 m²/g betragen. Besonders bevorzugt ist ein pyrogenes Siliciumdioxidpulver mit einer BET-Oberfläche von 30 bis 90 m²/g.

Pyrogen hergellte Siliciumdioxidpulver zeichnen sich durch eine hohe Reinheit aus. Kommerziell erhältliche pyrogen hergestellte Siliciumdioxidpulver, wie beispielsweise AEROSIL^{®}, Fa. Degussa, können in dem erfindungsgemäßen Verfahren eingesetzt werden. Darüber können auch speziell hochgereinigte Siliciumdioxidpulver wie AEROSIL^{®} OX 50 EG eingesetzt werden, bei dem Spurenelemente, wie Al, Ca, Cr, Cu, Fe, K, Li, Mg, Mn, Ni, Ti, Zr zu weniger als 1 ppm einzeln bzw. weniger als 5 ppm in Summe vorliegen.

Bei dem erfindungsgemäßen Verfahren wird weiterhin eine Metallverbindung eingesetzt, die unter den Reaktionsbedingungen flüssig ist und die bei Kontakt mit Wasser zu dem entsprechenden Metalloxid und einer flüchtigen Verbindung reagiert. Unter flüchtig ist dabei zu verstehen, dass innerhalb von 24 Stunden bei 25°C wenigstens 95% der Verbindung verdampft sind.

Vorzugsweise können solche Metallverbindungen eingesetzt werden, die als Metallkomponente Al, B, Ce, Cs, Er, Ga, Ge, Pb, Si, Ti oder Zr aufweisen. Metallverbindungen im Sinne der Erfindung sollen auch Metalloidverbindungen sein.

Besonders bevorzugt können Metallverbindungen mit Al, B, Si, Ti oder Zr als Metallkomponente sein.

Als Metallverbindungen können vorzugsweise Metallalkoholate eingesetzt werden, wobei die Alkoholatgruppierung ein aliphatischer Kohlenwasserstoffrest mit 1 bis 6 Kohlenstoffatomen ist.

Prinzipiell kann es vorteilhaft sein, Metallverbindungen einzusetzen, deren Reaktivität gegenüber Wasser eingeschränkt ist. Solche Verbindungen sind dem Fachmann bekannt.

Besonders bevorzugt können Tetraalkoxysilane Si(OR)₄, wie Tetraethoxysilan (TEOS), Tetra-n-propoxysilan, Tetraisopropoxysilan, Tetra-n-butoxysilan und/oder vorkondensierte Silane wie Dynasilan 40, Fa. Degussa, eingesetzt werden. Bei Dynasilan 40 handelt es sich um ein Gemisch von Ethylestern verschiedener Polykieselsäuren. Es entsteht bei Anwesenheit von Wasser aus TEOS durch teilweise Hydrolyse der Ethoxygruppen zu Hydroxylgruppen und nachfolgender Kondensation unter Bildung von Siloxanbindungen.

Bei dem erfindungsgemäßen Verfahren wird ein Siliciumdioxidpulver und eine Metallverbindung eingesetzt. Dabei beträgt der molare Anteil von Siliciumdioxid, bezogen auf die Summe von Siliciumdioxid und Metallverbindung, bevorzugt mindestens 50 mol-%, besonders bevorzugt mindestens 70 mol-% und ganz besonders bevorzugt mindestens 85 mol-%.

Insbesondere hat sich bewährt als Siliciumdioxidpulver ein pyrogen hergestelltes Siliciumdioxidpulver mit einer BET-Oberfläche von 30 bis 90 m²/g und als Metallverbindung TEOS einzusetzen.

Bei dem erfindungsgemäßen Verfahren ist es auch möglich, dass das Gemisch aus Siliciumdioxidpulver und Metallverbindung zusätzlich ein oder mehrere nicht reaktive, flüchtige, organische Lösungsmittel enthält. Dabei ist unter "flüchtig" zu verstehen, dass innerhalb von 24 Stunden bei 25°C wenigstens 95% des Lösungsmittels verdampft sind. Unter "nicht reaktiv" ist zu verstehen, dass das Lösungsmittel gegenüber Siliciumdioxid und der flüssigen Metallverbindung weitestgehend inert ist.

Als nicht reaktives, flüchtiges, organisches Lösungsmittel eignen C₁-C₄-Alkohole oder deren Gemische umfassend Methanol, Ethanol, 1-Propanol, 2-Propanol, 1-Butanol und 2-Butanol einsetzt.

Insbesondere hat es sich bewährt als Siliciumdioxidpulver ein pyrogen hergestelltes Siliciumdioxidpulver mit einer BET-Oberfläche von 30 bis 90 m²/g, als Metallverbindung TEOS und einen oder mehrere C₁-C₄-Alkohole, vorzugsweise Ethanol, einzusetzen.

Die Anteile betragen dabei vorzugsweise, jeweils in mol-% und bezogen auf die Summe von Siliciumdioxidpulver, TEOS und C₁-C₄-Alkohole, die sich zu 100 mol-% addieren:
- Siliciumdioxidpulver 20 bis 80
- TEOS 0,5 bis 20
- C₁-C₄-Alkohole 10 bis 65

Die Reinigung wird bei dem erfindungsgemäßen bei Temperaturen von 400°C bis 1100°C in einer Atmosphäre, die eine oder mehrere reaktive Verbindungen enthält durchgeführt. Unter "reaktiven" Verbindungen sind dabei solche zu verstehen, die geeignet sind die Hydroxylgruppen und die Verunreinigungen zu verringern.

Geeignete reaktive Verbindungen können Chlor, Salzsäure, Schwefelhalogenide und/oder Schwefeloxidhalogenide sein. Sie werden gewöhnlich und einer Konzentration von 0,5 bis 10 Vol.-% in Gemischen mit Luft, Sauerstoff, Helium, Stickstoff, Argon und/oder Kohlendioxid eingesetzt.

Die Temperaturen beim Reinigungs- und Sinterschritt richten sich hauptsächlich nach der Zusammensetzung des Granulates und sind dem Fachmann bekannt.

Als Dispergieraggregate können bevorzugt ein Mörser, ein 2-Walzenstuhl, ein 3-Walzenstuhl, eine Kugelmühle, oder ein Planetenkneter eingesetzt werden. Besonders bevorzugt sind 2-Walzenstühle und 3-Walzenstühle.

Ein weiterer Gegenstand der Erfindung ist ein gesintertes Siliciumdioxid enthaltendes Granulat, welches nach dem erfindungsgemäßen Verfahren erhältlich ist.

Bei dem gesinterten Siliciumdioxid enthaltendes Granulat kann es sich insbesondere um ein Kieselglasgranulat handeln.

Das gesinterte Siliciumdioxid enthaltende Granulat weist einen nur geringen Anteil an Verunreinigungen auf. Bevorzugt kann ein Granulat sein, das folgende Anteile an Verunreinigungen, alle in ppb, aufweist: Al ≤ 600, Ca ≤ 300, Cr ≤ 250, Cu ≤ 10, Fe ≤ 800, K ≤ 80, Li ≤ 10, Mg ≤ 20, Mn ≤ 20, Na ≤ 80, Ni ≤ 800, Ti ≤ 200, V ≤ 5 und Zr ≤ 80.

Besonders bevorzugt kann ein Granulat sein, das folgende Anteile an Verunreinigungen, alle in ppb, aufweist: Al ≤ 350, Ca ≤ 90, Cr ≤ 40, Cu ≤ 3, Fe ≤ 200, K ≤ 50, Li ≤ 1, Mg ≤ 10, Mn ≤ 5, Na ≤ 50, Ni ≤ 80, Ti ≤ 150, V ≤ 1, Zr ≤ 3.

Ein weiterer Gegenstand der Erfindung ist die Verwendung des gesinterten Siliciumdioxid enthaltenden Granulates zur Herstellung von Kieselgläsern, von Werkstoffen mit sehr niedrigen Ausdehnungskoeffizienten (Ultra Low Expansion, ULE-Werkstoffe), für photokatalytische Anwendungen, als superhydrophiler Bestandteil selbstreinigender Spiegel, für optische Artikel wie Linsen, als Abdichtung für Gase und Flüssigkeiten, als mechanische Schutzschicht, als Verwendung in Verbundwerkstoffen.

### Beispiele

Beispiel 1: 0,83 mol AEROSIL^{®} OX50 (Feuchte: 1,5 Gew.-%, SiOH-Konzentration: 0,2 mmol/g) werden auf einem 3-Walzenstuhl mit 0,23 mmol TEOS über einen Zeitraum von 20 min an Luft, die eine relative Feuchtigkeit von 60% aufweist, verknetet, die krümelige Masse zerteilt und nachfolgend einen Tag bei 20°C und 3 Stunden bei 105°C getrocknet. Anschließend wird die Masse bei einer Temperatur von 500°C mit Thionylchlorid behandelt und nachfolgend an Luft bei einer Temperatur von 1250°C 30 min gesintert.

Die Beispiele 2 bis 15 werden analog durchgeführt, wobei in den Beispielen 8 bis 12 2-Propanol anstelle von Ethanol und in den Beispielen 13 bis 15 AEROSIL^{®} 300 (Feuchte: 1,5 Gew.-%) anstelle von AEROSIL^{®} OX50 eingesetzt wird. In Tabelle 1 sind alle Einsatzstoffe und Einsatzstoffmengen wiedergegeben.

Glas hergestellt aus dem erfindungsgemäßen Kieselglasgranulat zeigt extrem wenige, feine Blasen, worin es sich von Gläsern, die ausgehend von den kommerziell erhältlichen Glasgranulaten unterscheidet: IOTA 6, Fa. UNIMIN (wenige große Blasen), MKC Silica (viele Blasen), Fa. Nippon Kasei, unterscheidet.

Das erfindungsgemäße Kieselglasgranulat weist folgende Anteile auf (alle in ppb): Al 521, Ca 165, Cr 47, Cu 3, Fe 147, K 44, Li 0,8, Mg 10, Mn 3, Na 68, Ni 113, Ti 132, V 0,5, Zr 3.

Zur Bestimmung des Metallgehaltes wird das Kieselglasgranulat in einer flußsäurehaltigen Lösung gelöst. Das sich bildende Siliciumtetrafluorid verdampft und der verbleibende Rückstand wird mittels Induktiv gekoppelter Plasma - Atom Emissions- Spektroskopie (ICP-AES) untersucht. Die Genauigkeit beträgt ca. 10 %.

**Tabelle 1: Einsatzstoffe und -mengen**

| **Beispiel** | **TEOS** | | **SiO₂*** | | **ROH**** | | **SiO₂/ TEOS** |
|---|---|---|---|---|---|---|---|
| | mol | mol% | mol | mol% | mol | mol% | mol% SiO₂ |
| **1** | 0,23 | 4,19 | 0,83 | 43,20 | 0,87 | 45,08 | 78,67 |
| **2** | 0,15 | 2,47 | 0,75 | 50,31 | 0,59 | 39,37 | 82,98 |
| **3** | 0,20 | 3,09 | 0,97 | 49,54 | 0,78 | 40,11 | 82,72 |
| **4** | 0,07 | 0,53 | 0,95 | 72,56 | 0,28 | 21,75 | 92,73 |
| **5** | 0,23 | 2,88 | 1,28 | 53,95 | 0,87 | 36,55 | 85,03 |
| **6** | 0,23 | 2, 61 | 1,43 | 56, 68 | 0,87 | 34,39 | 86,38 |
| **7** | 0,23 | 1,85 | 2,08 | 65,54 | 0,87 | 27,35 | 90,22 |
| **8** | 0,23 | 4,36 | 0,83 | 48,61 | 0,65 | 38,20 | 78,67 |
| **9** | 0,23 | 1,22 | 3,30 | 78,93 | 0,65 | 15,66 | 93,59 |
| **10** | 0,23 | 4,36 | 0,83 | 48,61 | 0,65 | 38,20 | 78,67 |
| **11** | 0,23 | 2,80 | 1,36 | 60,81 | 0,65 | 29,14 | 85,81 |
| **12** | 0,23 | 1,89 | 2,08 | 70,28 | 0,65 | 22,09 | 90,22 |
| **13** | 0,23 | 16,39 | 0,28 | 20,55 | 0,87 | 63,06 | 55,60 |
| **14** | 0,10 | 14,07 | 0,39 | 57,31 | 0,20 | 68,63 | 80,20 |
| **15** | 0,39 | 13,03 | 0,10 | 53,09 | 0,25 | 33,88 | 80,20 |

| | | | | | | | |
|---|---|---|---|---|---|---|---|
| * SiO₂ = AEROSIL^{®} OX 50, Beispiele 1-12; AEROSIL^{®} 300, Beispiele 13-15; **ROH = Ethanol, Beispiele 1-7 und 13-15; 2-Propanol Beispiele 8-12; | | | | | | | |

## Patentansprüche

1. Verfahren zur Herstellung eines gesinterten Siliciumdioxid enthaltenden Granulates mit einer BET-Oberfläche von weniger als 1 m²/g und einem Anteil an Verunreinigungen von weniger als 50 ppm, **dadurch gekennzeichnet, dass** man ein Gemisch, welches
- Siliciumdioxidpulver und eine Metallverbindung enthält,
- in einer Atmosphäre mit einer relativen Luftfeuchte von 10 bis 100%,
- bei Temperaturen von 0 bis 50°C intensiv mittels eines Dispergieraggregates vermengt, die krümelige Masse in Stücke zerteilt, nachfolgend trocknet, reinigt und sintert, wobei
- das Siliciumdioxidpulver
• aus Partikeln besteht, die auf ihrer Oberfläche an Siliciumatome gebundene Hydroxylgruppen, Si-OH, tragen,
• eine Feuchte von 0,1 - 10 Gew.-%, bezogen auf das Siliciumdioxidpulver, aufweist und
• mit einem Anteil, bezogen auf die Summe von Pulver und Metallverbindung, von 40 bis 95 mol-%, vorliegt
- die Metallverbindung,
• unter den Reaktionsbedingungen flüssig ist und
• bei Kontakt mit Wasser zu dem entsprechenden Metalloxid und einer flüchtigen Verbindung reagiert, und
- die Feuchte des Siliciumdioxidpulvers und/oder die Luftfeuchte wenigstens ausreicht um die Metallverbindung vollständig zu hydrolysieren,
- das Trocknen bei Temperaturen von 20°C bis 150°C und einem Druck von 1000 bis 10 mbar über einen Zeitraum von 1 Stunde bis 5 Tage erfolgt,
- die Reinigung bei 400°C bis 1100°C in einer Atmosphäre, die eine oder mehrere reaktive Verbindungen enthält, durchführt und
- anschließend sintert.

2. Verfahren nach Anspruch 1, **dadurch gekennzeichnet, dass** man ein Siliciumdioxidpulver einsetzt, dessen Si-OH-Konzentration 0,2 mmol/g bis 1,2 mmol/g beträgt.

3. Verfahren nach den Ansprüchen 1 oder 2, **dadurch gekennzeichnet, dass** man ein Siliciumdioxidpulver mit einer Feuchte von 0,5 bis 2,5 Gew.-% einsetzt.

4. Verfahren nach den Ansprüchen 1 bis 3, **dadurch gekennzeichnet, dass** man ein dotiertes Siliciumdioxidpulver oder ein Silicium-Metall-Mischoxidpulver einsetzt.

5. Verfahren nach den Ansprüchen 1 bis 4, **dadurch gekennzeichnet, dass** man ein pyrogen hergestelltes Siliciumdioxidpulver einsetzt.

6. Verfahren nach den Ansprüchen 1 bis 5, **dadurch gekennzeichnet, dass** man Metallverbindungen einsetzt, die als Metallkomponente Al, B, Ce, Cs, Er, Ga, Ge, Pb, Ti oder Zr aufweisen.

7. Verfahren nach den Ansprüchen 1 bis 6, **dadurch gekennzeichnet, dass** man als Metallverbindung Metallalkoholate einsetzt, wobei der Alkoholrest ein aliphatischer Kohlenwasserstoffrest mit 1 bis 6 Kohlenstoffatomen ist.

8. Verfahren nach den Ansprüchen 1 bis 7, **dadurch gekennzeichnet, dass** man als Metallverbindung Tetraalkoxysilane Si(OR)₄ einsetzt.

9. Verfahren nach den Ansprüchen 1 bis 8, **dadurch gekennzeichnet, dass** der molare Anteil von Siliciumdioxid, bezogen auf die Summe von Siliciumdioxid und Metallverbindung, mindestens 50 mol-% ist.

10. Verfahren nach Anspruch 1, **dadurch gekennzeichnet, dass** man als Siliciumdioxidpulver ein pyrogen hergestelltes Siliciumdioxidpulver mit einer BET-Oberfläche von 30 bis 90 m2/g und als Metallverbindung TEOS einsetzt.

11. Verfahren nach den Ansprüchen 1 bis 10, **dadurch gekennzeichnet, dass** das Gemisch zusätzlich ein oder mehrere nicht reaktive, flüchtige, organische Lösungsmittel enthält.

12. Verfahren nach Anspruch 11, **dadurch gekennzeichnet, dass** man als Siliciumdioxidpulver ein pyrogen hergestelltes Siliciumdioxidpulver mit einer BET-Oberfläche von 30 bis 90 m²/g, als Metallverbindung TEOS und einen oder mehrere C₁-C₄-Alkohole, vorzugsweise Ethanol, einsetzt.

13. Verfahren nach Anspruch 12, **dadurch gekennzeichnet, dass** die Anteile, jeweils in mol-% und bezogen auf die Summe von Siliciumdioxidpulver, TEOS und C₁-C₄-Alkohole, die sich zu 100 mol-% addieren, betragen:
- Siliciumdioxidpulver 20 bis 80
- TEOS 0,5 bis 20
- C₁-C₄-Alkohole 10 bis 65

14. Verfahren nach den Ansprüchen 1 bis 13, **dadurch gekennzeichnet, dass** als Verbindungen für die Reinigung Chlor, Salzsäure, Schwefelhalogenide und/oder Schwefeloxidhalogenide einsetzt.

15. Verfahren nach den Ansprüchen 1 bis 14, **dadurch gekennzeichnet, dass** als Dispergieraggregat ein Mörser, ein 2-Walzenstuhl, ein 3-Walzenstuhl, eine Kugelmühle, oder ein Planetenkneter eingesetzt wird.

16. Gesintertes Siliciumdioxid enthaltendes Granulat erhältlich nach dem Verfahren gemäß der Ansprüche 1 bis 15.

17. Gesintertes Siliciumdioxid enthaltendes Granulat nach Anspruch 16, **dadurch gekennzeichnet, dass** es ein Kieselglasgranulat ist.

18. Gesintertes Siliciumdioxid enthaltendes Granulat nach den Ansprüchen 16 oder 17, **dadurch gekennzeichnet, dass** die Anteile, alle in ppb, an Al ≤ 600, Ca ≤ 300, Cr ≤ 250, Cu ≤ 10, Fe ≤ 800, K ≤ 80, Li ≤ 10, Mg ≤ 20, Mn ≤ 20, Na ≤ 80, Ni ≤ 800, Ti ≤ 200, V ≤ 5 und Zr ≤ 80 sind.

19. Verwendung des gesinterten Siliciumdioxid enthaltenden Granulates gemäß der Ansprüche 16 bis 18 zur Herstellung von Kieselgläsern, von Werkstoffen mit sehr niedrigen Ausdehnungskoeffizienten (Ultra Low Expansion, ULE-Werkstoffe), für photokatalytische Anwendungen, als superhydrophiler Bestandteil selbstreinigender Spiegel, für optische Artikel wie Linsen, als Abdichtung für Gase und Flüssigkeiten, als mechanische Schutzschicht, als Verwendung in Verbundwerkstoffen.
